# EUROPEAN PATENT APPLICATION

(11) **EP 4 539 184 A1**
(43) Date of publication of application: **16.04.2025**
(21) Application number: 23835547.3
(22) Date of filing: 05.07.2023
(51) Int. Cl.: H01M 10/052, H01G 11/24, H01G 11/62, H01G 11/64, H01G 11/86, H01M 4/13, H01M 10/0567, H01M 10/0568, H01M 10/058

(54) **NON-AQUEOUS ELECTROLYTE STORAGE ELEMENT, DEVICE, METHOD FOR USING NON-AQUEOUS ELECTROLYTE STORAGE ELEMENT, AND METHOD FOR MANUFACTURING NON-AQUEOUS ELECTROLYTE STORAGE ELEMENT**

(30) Priority: 06.07.2022 JP 2022109250
(71) Applicant: GS Yuasa International Ltd., Kisshoin, Minami-ku, Kyoto-shi, Kyoto 601-8520 (JP)
(72) Inventor: KISHIMOTO, Akira, Kyoto-shi, Kyoto 601-8520 (JP)
(74) Representative: Isarpatent
(86) International application number: PCT/JP2023/024855
(87) International publication number: WO 2024/010016

(57) **Abstract**

A nonaqueous electrolyte energy storage device according to one aspect of the present invention, in which a positive electrode potential at an end-of-discharge voltage in normal use is 3.5 V (vs. Li/Li⁺) or less, includes: a positive electrode containing a positive active material having a ratio of an average particle size to an average primary particle size of 5 or less; and a nonaqueous electrolyte containing a compound containing a sulfur element.

## Description

### TECHNICAL FIELD

The present invention relates to a nonaqueous electrolyte energy storage device, a device, a method for using a nonaqueous electrolyte energy storage device, and a method for manufacturing a nonaqueous electrolyte energy storage device.

### BACKGROUND ART

Nonaqueous electrolyte secondary batteries typified by lithium ion secondary batteries are widely used in electronic devices such as personal computers and communication terminals, motor vehicles, and the like since these secondary batteries have a high energy density. The nonaqueous electrolyte secondary batteries generally include a pair of electrodes electrically separated from each other by a separator, and a nonaqueous electrolyte interposed between the electrodes, and are configured to allow charge transport ions to be transferred between the two electrodes for charge-discharge. Capacitors such as lithium ion capacitors and electric double layer capacitors are also widely used as nonaqueous electrolyte energy storage devices other than the nonaqueous electrolyte secondary batteries.

For improving the performance of the nonaqueous electrolyte energy storage devices, the inclusion of various additives in the nonaqueous electrolytes has been studied. Patent Document 1 describes a nonaqueous secondary battery including a nonaqueous electrolyte including an additive such as a cyclic sulfate ester.

### PRIOR ART DOCUMENT

### PATENT DOCUMENT

Patent Document 1: JP-A-2003-308875

### SUMMARY OF THE INVENTION

### PROBLEMS TO BE SOLVED BY THE INVENTION

By setting the end-of-discharge voltage of the nonaqueous electrolyte energy storage device low, the amount of electricity that can be taken out from the nonaqueous electrolyte energy storage device can be increased, that is, the discharge capacity can be increased. However, in a case where the end-of-discharge voltage is set to be low, and charge-discharge in which the positive electrode potential reaches a low potential is repeated, the discharge capacity is likely to decrease with repeated charge-discharge. As a means for suppressing a decrease in discharge capacity associated with repeated charge-discharge, it is conceivable to contain an additive such as a compound containing a sulfur element in the nonaqueous electrolyte. However, in the nonaqueous electrolyte energy storage device in which the end-of-discharge voltage is set to be low and charge-discharge is repeated until the positive electrode potential reaches a low potential (for example, 3.5 V (vs. Li/Li⁺) or less), when a compound containing a sulfur element is contained in the nonaqueous electrolyte, the effect of suppressing the decrease in the capacity retention ratio after charge-discharge cycles does not occur, and conversely, the capacity retention ratio may be further decreased.

An object of the present invention is to provide a nonaqueous electrolyte energy storage device having a positive electrode potential of 3.5 V (vs. Li/Li⁺) or less at an end-of-discharge voltage in normal use and having a high capacity retention ratio after charge-discharge cycles, a device including such a nonaqueous electrolyte energy storage device, a method for using such a nonaqueous electrolyte energy storage device, and a method for manufacturing such a nonaqueous electrolyte energy storage device.

### MEANS FOR SOLVING THE PROBLEMS

A nonaqueous electrolyte energy storage device according to one aspect of the present invention, in which a positive electrode potential at an end-of-discharge voltage in normal use is 3.5 V (vs. Li/Li⁺) or less, includes: a positive electrode containing a positive active material having a ratio of an average particle size to an average primary particle size of 5 or less; and a nonaqueous electrolyte containing a compound containing a sulfur element.

A device according to another aspect of the present invention includes the nonaqueous electrolyte energy storage device according to an aspect of the present invention.

A method for using a nonaqueous electrolyte energy storage device according to another aspect of the present invention includes discharging a nonaqueous electrolyte energy storage device including a positive electrode containing a positive active material having a ratio of an average particle size to an average primary particle size of 5 or less and a nonaqueous electrolyte containing a compound containing a sulfur element until a positive electrode potential reaches 3.5 V (vs. Li/Li⁺) or less.

A method for manufacturing a nonaqueous electrolyte energy storage device according to another aspect of the present invention is a method for manufacturing a nonaqueous electrolyte energy storage device, the method including: preparing a positive electrode containing a positive active material having a ratio of an average particle size to an average primary particle size of 5 or less; and preparing a nonaqueous electrolyte containing a compound containing a sulfur element, in which a content of the compound containing a sulfur element in the nonaqueous electrolyte is 0.5 mass% or more, and a positive electrode potential at an end-of-discharge voltage in normal use is 3.5 V (vs. Li/Li⁺) or less.

### ADVANTAGES OF THE INVENTION

According to any one aspect of the present invention, it is possible to provide a nonaqueous electrolyte energy storage device having a positive electrode potential of 3.5 V (vs. Li/Li⁺) or less at an end-of-discharge voltage in normal use and having a high capacity retention ratio after charge-discharge cycles, a device including such a nonaqueous electrolyte energy storage device, a method for using such a nonaqueous electrolyte energy storage device, and a method for manufacturing such a nonaqueous electrolyte energy storage device.

### BRIEF DESCRIPTION OF THE DRAWINGS

Fig. 1 is a see-through perspective view illustrating an embodiment of a nonaqueous electrolyte energy storage device.
Fig. 2 is a schematic diagram showing an embodiment of an energy storage apparatus including a plurality of nonaqueous electrolyte energy storage devices.

### MODE FOR CARRYING OUT THE INVENTION

First, an outline of a nonaqueous electrolyte energy storage device, a device, a method of using the nonaqueous electrolyte energy storage device, and a method of manufacturing the nonaqueous electrolyte energy storage device disclosed in the present specification will be described.
[1] A nonaqueous electrolyte energy storage device according to one aspect of the present invention, in which a positive electrode potential at an end-of-discharge voltage in normal use is 3.5 V (vs. Li/Li⁺) or less, includes: a positive electrode containing a positive active material having a ratio of an average particle size to an average primary particle size of 5 or less; and a nonaqueous electrolyte containing a compound containing a sulfur element.

The nonaqueous electrolyte energy storage device according to [1] is a nonaqueous electrolyte energy storage device having a positive electrode potential of 3.5 V (vs. Li/Li⁺) or less at an end-of-discharge voltage in normal use, and has a high capacity retention ratio after charge-discharge cycles. The reasons therefor are not clear, but the following reasons are presumed. The compound containing a sulfur element contained in the nonaqueous electrolyte is decomposed to form a film covering the active materials of the positive electrode and the negative electrode. It is considered that such a coating film formed on the surface of the active materials exerts an effect of suppressing a decrease in discharge capacity. However, it is considered that when charge-discharge cycles with a positive electrode potential of 3.5 V (vs. Li/Li⁺) or less is performed, cracking of the positive active material is likely to occur, and when the nonaqueous electrolyte contains a compound containing a sulfur element, cracking of the positive active material is promoted by the influence of an acid which is a decomposition by-product of the compound containing the sulfur element. Such cracking of the positive active material causes a decrease in discharge capacity. On the other hand, the positive active material having a ratio of an average particle size to an average primary particle size of 5 or less is a granular material formed of a small number of primary particles, and therefore is hardly cracked. Therefore, in the nonaqueous electrolyte energy storage device using such a positive active material, even when the nonaqueous electrolyte contains a compound containing a sulfur element and charge-discharge is performed in which the positive electrode potential reaches 3.5 V (vs. Li/Li⁺) or less, cracking of the positive active material hardly occurs, and the effect of protecting the surface of the active materials by the compound containing a sulfur element is sufficiently exerted. For these reasons, it is presumed that the nonaqueous electrolyte energy storage device according to [1] is a nonaqueous electrolyte energy storage device having a positive electrode potential of 3.5 V (vs. Li/Li⁺) or less at an end-of-discharge voltage in normal use, and exhibits an effect of having a high capacity retention ratio after charge-discharge cycles.

The term "in normal use" means use of the nonaqueous electrolyte energy storage device while employing charge-discharge conditions recommended or specified for the nonaqueous electrolyte energy storage device. The discharge condition is determined by, for example, setting of a device using the nonaqueous electrolyte energy storage device.

The "average primary particle size" of the positive active material refers to an average value of primary particle sizes of arbitrary fifty primary particles constituting the positive active material observed by a scanning electron microscope (SEM). The primary particles are particles in which no grain boundary is observed in appearance in the observation with the SEM. The primary particle size of the primary particles is determined as follows. The shortest diameter passing through the center of the minimum circumscribed circle of the primary particle is defined as a minor axis, and the diameter passing through the center and orthogonal to the minor axis is defined as a major axis. The average value of the major axis and the minor axis is defined as the primary particle size. When there are two or more shortest diameters, a shortest diameter with the longest orthogonal diameter is defined as a minor axis.

The "average particle size" of the positive active material refers to a value at which a volume-based integrated distribution calculated in accordance with JIS-Z-8819-2 (2001) is 50% (D50: median size) based on a particle size distribution measured by a laser diffraction/scattering method for a diluted solution obtained by diluting the positive active material with a solvent in accordance with JIS-Z-8815 (2013). In addition, it has been confirmed that the average particle size based on the measurement mentioned above is almost equal to the average secondary particle size that is the average value of particle sizes of respective secondary particles measured by extracting fifty particles excluding extremely large particles and extremely small particles from the SEM image of the particles. The particle sizes of respective secondary particles based on the measurement from the SEM image, are determined as follows. The SEM image is acquired according to the case of determining the "average primary particle size" mentioned above. The shortest diameter passing through the center of the minimum circumscribed circle of each secondary particle is defined as a minor axis, and the diameter passing through the center and orthogonal to the minor axis is defined as a major axis. The average value of the major axis and the minor axis is defined as the particle size of each secondary particle. When there are two or more shortest diameters, a shortest diameter with the longest orthogonal diameter is defined as a minor axis.

The positive active material for measuring the average primary particle size and the average particle size is a positive active material before charge-discharge or when brought into a fully discharged state by the following method. First, the nonaqueous electrolyte energy storage device is subjected to constant current charge with a current of 0.05 C until the voltage becomes an end-of-charge voltage in normal use, so that the energy storage device is brought to a fully charged state. After a 30-minute pause, the energy storage device is subjected to constant current discharge with a current of 0.05 C to the lower limit voltage in normal use. The energy storage device is disassembled to take out the positive electrode, and a half cell with a metal lithium electrode as a counter electrode is assembled, and subjected to constant current discharge at a current of 10 mAper 1 g of the positive active material until the positive electrode potential reaches 3.0 V vs. Li/Li⁺, thereby adjusting the positive electrode to the fully discharged state. The cell is disassembled again to take out the positive electrode. A nonaqueous electrolyte attached onto the taken out positive electrode is sufficiently washed with dimethyl carbonate and is dried at room temperature all day and night, and then the positive active material is collected. The collected positive active material is subjected to measurement. Operations from disassembly of the nonaqueous electrolyte energy storage device to collection of the positive active material are performed in an argon atmosphere having a dew point of -60°C or lower.

[2] In the nonaqueous electrolyte energy storage device according to [1], the compound containing a sulfur element is preferably a member of sulfates.

The nonaqueous electrolyte energy storage device according to [2] has a high capacity retention ratio after charge-discharge cycles, and can reduce initial direct-current resistance.

[3] In the nonaqueous electrolyte energy storage device according to [1] or [2], it is preferable that the nonaqueous electrolyte further contains lithium difluorophosphate.

The nonaqueous electrolyte energy storage device according to [3] has a higher capacity retention ratio after charge-discharge cycles.

[4] A device according to another aspect of the present invention includes the nonaqueous electrolyte energy storage device according to any one of [1] to [3] mentioned above.

The nonaqueous electrolyte energy storage device included in the device according to [4] is a nonaqueous electrolyte energy storage device having a positive electrode potential of 3.5 V (vs. Li/Li⁺) or less at an end-of-discharge voltage in normal use, and has a high capacity retention ratio after charge-discharge cycles. Accordingly, the device according to [4] mentioned above can be used for a long period of time, and the replacement frequency of the nonaqueous electrolyte energy storage device can be reduced.

[5] A method for using a nonaqueous electrolyte energy storage device according to another aspect of the present invention includes discharging a nonaqueous electrolyte energy storage device including a positive electrode containing a positive active material having a ratio of an average particle size to an average primary particle size of 5 or less and a nonaqueous electrolyte containing a compound containing a sulfur element until a positive electrode potential reaches 3.5 V (vs. Li/Li⁺) or less.

In the method for using a nonaqueous electrolyte energy storage device according to [5], the capacity retention ratio after charge-discharge cycles is high although the positive electrode potential of the nonaqueous electrolyte energy storage device reaches 3.5 V (vs. Li/Li⁺) or less. Therefore, in the method for using the nonaqueous electrolyte energy storage device according to [5], the nonaqueous electrolyte energy storage device can be used for a long period of time, and the replacement frequency of the nonaqueous electrolyte energy storage device can be reduced.

[6] A method for manufacturing a nonaqueous electrolyte energy storage device according to another aspect of the present invention is a method for manufacturing a nonaqueous electrolyte energy storage device, the method including: preparing a positive electrode containing a positive active material having a ratio of an average particle size to an average primary particle size of 5 or less; and preparing a nonaqueous electrolyte containing a compound containing a sulfur element, in which a content of the compound containing a sulfur element in the nonaqueous electrolyte is 0.5 mass% or more, and a positive electrode potential at an end-of-discharge voltage in normal use is 3.5 V (vs. Li/Li⁺) or less.

According to the method for manufacturing a nonaqueous electrolyte energy storage device according to [6], it is possible to manufacture a nonaqueous electrolyte energy storage device having a positive electrode potential of 3.5 V (vs. Li/Li⁺) or less at an end-of-discharge voltage in normal use, and having a high capacity retention ratio after charge-discharge cycles.

A nonaqueous electrolyte energy storage device according to an embodiment of the present invention, an energy storage apparatus, a device, a method for using the nonaqueous electrolyte energy storage device, a method for manufacturing the nonaqueous electrolyte energy storage device, and other embodiments will be described in detail. It is to be noted that the names of the respective constituent members (respective constituent elements) for use in the respective embodiments may be different from the names of the respective constituent members (respective constituent elements) for use in the background art.

### <Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present to be impregnated in the positive electrode, the negative electrode, and the separator. A nonaqueous electrolyte secondary battery (hereinafter, also referred to simply as a "secondary battery") will be described as an example of the nonaqueous electrolyte energy storage device.

### (Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁻² Ω ·cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive substrate is preferably 3 µm or more and 50 µm or less, more preferably 5 µm or more and 40 µm or less, still preferably 8 µm or more and 30 µm or less, particularly preferably 10 µm or more and 25 µm or less. The average thickness of the positive substrate falls within the range mentioned above, thereby allowing the energy density per volume of the nonaqueous electrolyte energy storage device to be increased while increasing the strength of the positive substrate.

The intermediate layer is a layer arranged between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder, a thickener, and a filler, if necessary.

The positive active material contains particles (hereinafter, the particles are also referred to as "single-particle-based particles") having a ratio of an average particle size to an average primary particle size of 5 or less. The ratio of the average particle size to the average primary particle size of the single-particle-based particles is preferably 4 or less, more preferably 3 or less, still more preferably 2.5 or less. The ratio of the ratio of the average particle size to the average primary particle size is equal to or less than the upper limit mentioned above, thereby allowing advantages of the single-particle-based particles to be sufficiently brought, such as the fact that cracks and the like are less likely to be generated. The lower limit of the ratio of the average particle size to the average primary particle size of the single-particle-based particles may be 1. From the difference between the method for measuring the average primary particle size and the method for measuring the average particle size, the lower limit of the ratio of the average particle size to the average primary particle size may be less than 1, for example, 0.9. The ratio of the average particle size to the average primary particle size of the single-particle-based particles may be any lower limit or more and any upper limit or less.

As long as the ratio of the average particle size to the average primary particle size is 5 or less, the single-particle-based particles may be particles composed of primary particles (single particles), secondary particles formed by aggregation of a plurality of primary particles, or mixed particles of single particles and secondary particles.

The positive active material constituting the single-particle-based particles can be appropriately selected from known positive active materials. As a positive active material for a lithium ion secondary battery, a material capable of storing and releasing lithium ions is normally used. Examples of the positive active material include lithium transition metal composite oxides that have an α-NaFeO₂-type crystal structure, lithium transition metal oxides that have a spinel-type crystal structure, polyanion compounds, chalcogenides, and sulfur. Examples of the lithium transition metal composite oxides that have an α-NaFeO₂-type crystal structure include Li[LiₓNi₍₁₋ₓ₎]O₂ (0 ≤ x < 0.5), Li[LiₓNi_{y}Co_{(1-x-y)}]O₂ (0 ≤ x < 0.5, 0 < y < 1, 0 < 1-x-y), Li[LiₓCo₍₁₋ₓ₎]O₂ (0 ≤ x < 0.5), Li[LiₓNi_{y}Mn_{(1-x-y)}]O₂ (0 ≤ x < 0.5, 0 < y < 1, 0 < 1-x-y), Li[LiₓNi_{y}Mn_{β}Co_{(1-x-y-β)}]O₂ (0 ≤ x < 0.5, 0 < y, 0 < β, 0.5 < y + β < 1, 0 < 1-x-y-β), and Li[LiₓNi_{y}Co_{β}Al_{(1-x-y-β)}]O₂ (0 ≤ x < 0.5, 0 < y, 0 < β, 0.5 < y + β < 1, 0 < 1-x-y-β). Examples of the lithium-transition metal composite oxides having a spinel-type crystal structure include LiₓMn₂O₄ and LiₓNi_{y}Mn_{(2-y)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include a titanium disulfide, a molybdenum disulfide, and a molybdenum dioxide. Some of atoms or polyanions in these materials may be substituted with atoms or anion species composed of other elements. As the positive active material, one of these materials may be used singly, or two or more thereof may be used in mixture.

As the positive active material constituting the single-particle-based particles, a lithium transition metal composite oxide having an α-NaFeO₂-type crystal structure is preferable. In other words, the single-particle-based particles are preferably particles of a lithium transition metal composite oxide having an α-NaFeO₂-type crystal structure. Such a lithium transition metal composite oxide may contain a nickel element, may contain a nickel element and a cobalt element, or may contain a nickel element, a cobalt element, and at least one of a manganese element and an aluminum element. The lithium transition metal composite oxide containing such an element is usually used in the form of secondary particles formed by aggregating a large number of primary particles in which the ratio of the average particle size to the average primary particle size is more than 5 from the viewpoint of electron conductivity or the like, and cracking associated with charge-discharge cycles is likely to occur. Therefore, when the embodiment of the present invention is applied to a nonaqueous electrolyte energy storage device using a lithium transition metal composite oxide containing such an element, the effect of increasing the capacity retention ratio after charge-discharge cycles is particularly remarkably produced.

The content of the nickel element with respect to the metal elements excluding the lithium element in the lithium-transition metal composite oxide is preferably 30 mol% or more and 100 mol% or less, more preferably 40 mol% or more and 90 mol% or less, still more preferably 50 mol% or more and 80 mol% or less.

The content of the cobalt element with respect to metal elements other than the lithium element in the lithium transition metal composite oxide is preferably 5 mol% or more and 70 mol% or less, more preferably 10 mol% or more and 50 mol% or less, still more preferably 15 mol% or more and 40 mol% or less.

The content of the manganese element with respect to metal elements excluding the lithium element in the lithium-transition metal composite oxide is preferably 5 mol% or more and 70 mol% or less, more preferably 10 mol% or more and 50 mol% or less, still more preferably 15 mol% or more and 40 mol% or less.

The content of the aluminum element with respect to metal elements other than the lithium element in the lithium transition metal composite oxide is preferably 0 mol% or more and 10 mol% or less, and may be 0.1 mol% or more and 5 mol% or less. The content of the aluminum element with respect to the metal element other than the lithium element in the lithium transition metal composite oxide may be 1 mol% or less, or may be 0 mol%.

The lithium transition metal composite oxide may further contain a metal element other than the lithium element, the nickel element, the cobalt element, the manganese element, and the aluminum element. However, the total content of the nickel element, the cobalt element, the manganese element, and the aluminum element with respect to the metal element other than the lithium element in the lithium transition metal composite oxide is preferably 80 mol% or more, 90 mol% or more, 95 mol% or more, 99 mol% or more, or 100 mol%.

As the lithium transition metal composite oxide, a compound represented by the following formula (1) can be suitably used.

Li_{1+α}Me_{1-α}O₂ ••• (1)

In the formula (1), Me is a metal element other than Li. The condition of 0 ≤ α < 1 is met.

In the formula (1), α may be 0 or more and 0.5 or less, 0 or more and 0.3 or less, or 0 or more and 0.1 or less, or 0. Me may be composed of one kind or two or more kinds of metal elements. As the types and contents (compositional ratios) of specific metal elements constituting Me (metal elements other than Li), values of the respective metal elements contained in the above-described lithium transition metal composite oxide and suitable contents thereof can be adopted.

The compositional ratio of the lithium transition metal composite oxide refers to a compositional ratio before charge-discharge, or a compositional ratio when the positive active material is brought into a completely discharged state by the method for bringing the positive active material into a fully discharged state.

The average particle size (average primary particle size) of the primary particles constituting the single-particle-based particles may be, for example, 0.1 µm or more and 10 µm or less, 0.3 µm or more and 5 µm or less, or 1 µm or more and 3 µm or less.

The average particle size of the single-particle-based particles (positive active material having a ratio of an average particle size to an average primary particle size of 5 or less) is, for example, preferably 0.1 µm or more and 20 µm or less, more preferably 0.5 µm or more and 15 µm or less, still preferably 1 µm or more and 12 µm or less, still more preferably 3 µm or more and 10 µm or less. By setting the average particle size of the single-particle-based particles to be equal to or greater than the above lower limit, the single-particle-based particles are easily manufactured or handled. By setting the average particle size of the single-particle-based particles to the above upper limit or less, the electron conductivity of the positive active material layer is improved.

The single-particle-based particles can be manufactured by any publicly known method, and a commercially available product may be used for the single-particle-based particles. In the process of manufacturing the positive active material, increasing the firing temperature or prolonging the firing time causes the crystals of the plurality of primary particles to grow to increase the primary particle size, thereby allowing single-particle-based particles to be obtained. Alternatively, the single-particle-based particles can be obtained by crushing the secondary particles.

In order to obtain single-particle-based particles having a predetermined particle size (average particle size), a pulverizer, a classifier, or the like is used. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the single-particle-based particles (positive active material having a ratio of an average particle size to an average primary particle size of 5 or less) in the positive active material layer is preferably 50 mass% or more and 99 mass% or less, more preferably 70 mass% or more and 98 mass% or less, still more preferably 80 mass% or more and 95 mass% or less. When the content of the single-particle-based particles in the positive active material layer is within the above range, the capacity retention ratio after charge-discharge cycles can be further increased.

The positive active material layer may contain other positive active materials other than single-particle-based particles (positive active material having a ratio of an average particle size to an average primary particle size of 5 or less). The single-particle-based particles and the other positive active material (positive active material having a ratio of an average particle size to an average primary particle size of more than 5) may be positive active materials composed of different materials. However, the content of the single-particle-based particles in all the positive active materials contained in the positive active material layer is preferably 80 mass% or more and 100 mass% or less, more preferably 95 mass% or more and 100 mass% or less, and still more preferably 100 mass%. In other words, the ratio of the average particle size to the average primary particle size based on the particles of all the positive active materials contained in the positive active material layer is preferably 5 or less, more preferably 4 or less, 3 or less, or 2.5 or less. In such a case, the capacity retention ratio after charge-discharge cycles can be further increased. The ratio of the average particle size to the average primary particle size based on the particles of all the positive active materials contained in the positive active material layer may be 0.9 or more, or may be 1 or more. The ratio of the average particle size to the average primary particle size based on the particles of all the positive active materials contained in the positive active material layer may be any lower limit or more described above and any upper limit or more described above.

The content of all of the positive active materials in the positive material layer is preferably 50% by mass or more and 99% by mass or less, more preferably 70% by mass or more and 98% by mass or less, still more preferably 80% by mass or more and 95% by mass or less. When the content of the positive active material falls within the range mentioned above, a balance can be achieved between the increased energy density and manufacturability of the positive active material layer.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. These materials may be composited and then used. For example, a composite material of carbon black and CNT may be used. Among these materials, carbon black is preferable from the viewpoints of electron conductivity and coatability, and in particular, acetylene black is preferable.

The content of the conductive agent in the positive active material layer is preferably 1% by mass or more and 10% by mass or less, more preferably 3% by mass or more and 9% by mass or less. When the content of the conductive agent falls within the range mentioned above, the energy density of the nonaqueous electrolyte energy storage device can be enhanced.

Examples of the binder include: thermoplastic resins such as fluororesins (e.g., polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 3% by mass or more and 9% by mass or less. The content of the binder falls within the range mentioned above, thereby allowing the positive active material to be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance. When a thickener is used for the positive active material layer, the content of the thickener in the positive active material layer can be 0.1% by mass or more and 8% by mass or less, and is typically preferably 5% by mass or less, more preferably 2% by mass or less. The technique disclosed herein can be preferably carried out in an aspect in which the positive active material layer contains no thickener.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. When a filler is used in the positive active material layer, the content of the filler in the positive active material layer can be 0.1% by mass or more and 8% by mass or less, and is typically preferably 5% by mass or less, more preferably 2% by mass or less. The technique disclosed herein can be preferably carried out in an aspect in which the positive active material layer contains no filler.

The positive active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Nb, and W as a component other than the positive active material, the conductive agent, the binder, the thickener, and the filler.

### (Negative electrode)

The negative electrode includes a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 µm or more and 35 µm or less, more preferably 3 µm or more and 30 µm or less, still preferably 4 µm or more and 25 µm or less, particularly preferably 5 µm or more and 20 µm or less. The average thickness of the negative substrate falls within the range mentioned above, thereby allowing the energy density per volume of the nonaqueous electrolyte energy storage device to be increased while increasing the strength of the negative substrate.

The negative active material layer contains a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode.

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material can be appropriately selected from known negative active materials. As the negative active material for a lithium ion secondary battery, a material capable of occluding and releasing lithium ions is usually used. Examples of the negative active material include metal Li; metals or metalloids such as Si and Sn; metal oxides or metalloid oxides such as a Si oxide, a Ti oxide, and a Sn oxide; titanium-containing oxides such as Li₄Ti₅O₁₂, LiTiO₂, and TiNb₂O₇; a polyphosphoric acid compound; silicon carbide; and carbon materials such as graphite and non-graphitic carbon (easily graphitizable carbon or hardly graphitizable carbon). Among these materials, graphite, and non-graphitic carbon are preferable, and graphite is more preferable. In the negative active material layer, one of these materials may be used singly, or two or more thereof may be mixed and used.

The term "graphite" refers to a carbon material in which an average lattice spacing (d₀₀₂) of the (002) plane determined by an X-ray diffraction method before charge-discharge or in a discharge state is 0.33 nm or more and less than 0.34 nm. Examples of the graphite include natural graphite and artificial graphite. Artificial graphite is preferable from the viewpoint that a material that has stable physical properties can be obtained.

The term "non-graphitic carbon" refers to a carbon material in which the average lattice spacing (d₀₀₂) of the (002) plane determined by the X-ray diffraction method before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

In this regard, the "discharged state" means a state discharged such that lithium ions that can be occluded and released in association with charge-discharge are sufficiently released from the carbon material as the negative active material. For example, the "discharged state" refers to a state where the open circuit voltage is 0.7 V or higher in a half cell that has, as a working electrode, a negative electrode including a carbon material as a negative active material, and has metal Li as a counter electrode.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 µm or less. When the negative active material is a carbon material, a titanium-containing oxide, or a polyphosphoric acid compound, the average particle size thereof may be 1 µm or more and 100 µm or less. When the negative active material is Si, Sn, an oxide of Si, an oxide of Sn, or the like, the average particle size thereof may be 1 nm or more and 1 µm or less. By setting the average particle size of the negative active material to be equal to or more than the above lower limit the negative active material is easily manufactured or handled. By setting the average particle size of the negative active material to be equal to or less than the above upper limit, the electron conductivity of the negative active material layer is improved. A crusher, a classifier, or the like is used in order to obtain a powder with a predetermined particle size. The crushing method and classification method can be selected from, for example, the methods exemplified for the positive electrode. When the negative active material is a metal such as metal Li, the negative active material layer may have the form of a foil.

The content of the negative active material in the negative active material layer is preferably 60% by mass or more and 99% by mass or less, more preferably 90% by mass or more and 98% by mass or less. The content of the negative active material falls within the range mentioned above, thereby allowing a balance to be achieved between the increased energy density and manufacturability of the negative active material layer.

When the conductive agent is used for the negative active material layer, the content of the conductive agent in the negative active material layer may be 1% by mass or more and 10% by mass or less, or may be 3% by mass or more and 9% by mass or less. When the negative active material is a carbon material or the like, the negative active material layer may not contain a conductive agent.

The content of the binder in the negative active material layer is preferably 1% by mass or more and 10% by mass or less, and more preferably 3% by mass or more and 9% by mass or less. The content of the binder falls within the range mentioned above, thereby allowing the negative active material to be stably held.

The content of the thickener in the negative active material layer is preferably 0.1 mass% or more and 8 mass% or less, and more preferably 0.3 mass% or more and 5 mass% or less.

When a filler is used in the negative active material layer, the content of the filler in the negative active material layer can be 0.1 mass% or more and 8 mass% or less, and is usually preferably 5 mass% or less, and more preferably 2 mass% or less. The technique disclosed herein can be preferably carried out in an aspect in which the negative active material layer does not contain a filler.

### (Separator)

The separator can be appropriately selected from known separators. As the separator, for example, a separator composed of only a substrate layer, a separator where a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compound, simple substances or complexes of these substances may be used alone, or two or more thereof may be used in mixture. Among these inorganic compounds, silicon oxide, aluminum oxide, or aluminosilicate is preferable from the viewpoint of safety of the nonaqueous electrolyte energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

### (Nonaqueous electrolyte)

The nonaqueous electrolyte contains a compound containing a sulfur element (hereinafter, it is also referred to as a "sulfur-based compound"). The sulfur-based compound is usually an organic compound containing a sulfur element. In one embodiment of the present invention, the sulfur-based compound may be a nonionic compound. Examples of the sulfur-based compound include sulfates, sulfonic acid esters, sulfones, sulfites, sulfoxides, sulfides, and disulfides. The sulfur-based compound may be used one kind or two or more kinds thereof.

The sulfates refer to compounds including a structure that has two carbon atoms each bonded to an oxysulfonyloxy group (-O-S(=O)₂-O-). Examples of the sulfates include a cyclic sulfate and a chain sulfate. Specific examples of the cyclic sulfate include ethylene sulfate, 1,3-propylene sulfate, 2,3-propylene sulfate, 4,5-pentene sulfate, 4,4'-bis(2,2-dioxo-1,3,2-dioxathiolane), and 4-methylsulfonyloxymethyl-2,2-dioxo-1,3,2-dioxathiolane. Specific examples of the chain sulfate include dimethyl sulfate and diethyl sulfate.

The sulfonic acid esters refer to compounds having a structure in which two carbon atoms are each bonded to a sulfonyloxy group (-S(=O)₂O-). Examples of the sulfonic acid esters include cyclic sulfonic acid esters and chain sulfonic acid esters. Specific examples of the cyclic sulfonic acid ester include 1,3-propane sultone, 1,4-butane sultone, 1,3-propene sultone, 1,4-butene sultone, 1-methyl-1,3-propene sultone, 2-methyl-1,3-propene sultone, and 3-methyl-1,3-propene sultone. Specific examples of the chain sulfonic acid ester include methyl methanesulfonate and ethyl methanesulfonate.

The sulfones refer to compounds having a structure in which two carbon atoms are each bonded to a sulfonyl group (-S(=O)₂-). Examples of the sulfones include cyclic sulfones and chain sulfones. Specific examples of the cyclic sulfone include sulfolane, 3-methylsulfolane, 3-sulfolene, 1,1-dioxothiophene, 3-methyl-2,5-dihydrothiophene-1, 1-dioxide, and methyl 3-sulfolene-3-carboxylate. Specific examples of the chain sulfone include dimethylsulfone, diethylsulfone, ethylmethylsulfone, and divinylsulfone.

The sulfites refer to compounds having a structure in which two carbon atoms are each bonded to an oxysulfinyloxy group (-O-S(=O)-O-). Examples of the sulfites include a cyclic sulfite and a chain sulfite. Specific examples of the cyclic sulfite include ethylene sulfite, 1,2-propylene glycol sulfite, trimethylene sulfite, and 1,3-butylene glycol sulfite. Specific examples of the chain sulfite include dimethylsulfite and diethylsulfite.

The sulfoxides refer to compounds having a structure in which two carbon atoms are each bonded to a sulfinyl group (-S(=O)-). Examples of the sulfoxides include a cyclic sulfoxide and a chain sulfoxide. Specific examples of the cyclic sulfoxide include tetramethylene sulfoxide. Specific examples of the chain sulfoxide include dimethyl sulfoxide and diethyl sulfoxide.

The sulfides refer to compounds having a structure in which two carbon atoms are each bonded to divalent sulfur (-S-). Examples of the sulfides include a cyclic sulfide and a chain sulfide. Specific examples of the cyclic sulfide include tetrahydrothiophene, thiophene, thiane, 1,3-dithiane, 5,6-dihydro-1,4-dithiine-2, 3-dicarboxylic anhydride, and 3,4-thiophenedicarboxylic anhydride. Specific examples of the chain sulfide include diallyl sulfide, diphenyl sulfide, and thioanisole.

The disulfides refer to compounds having a structure in which two carbon atoms are each bonded to a disulfide group (-SS-). Examples of the disulfides include cyclic disulfides and chain disulfides. Specific examples of the disulfides include diphenyl disulfide, dipyridinium disulfide, and diallyl disulfide.

As the sulfur-based compound, a compound containing a sulfonyl group (-S(=O)₂-) structure is preferable. Examples of such a compound include the sulfates, sulfonic acid esters, and sulfones described above, and sulfates are preferable. By using sulfates as the sulfur-based compound, the initial direct-current resistance of the nonaqueous electrolyte energy storage device can be lowered in addition to the high capacity retention ratio after charge-discharge cycles.

Among sulfates, ethylene sulfate, 1,3-propylene sulfate, 2,3-propylene sulfate, 4,5-pentene sulfate, 4,4'-bis(2,2-dioxo-1,3,2-dioxathiolane), and 4-methylsulfonyloxymethyl-2,2-dioxo-1,3,2-dioxathiolane are preferable. These compounds have the same sulfur atom content per molecular weight or the same sulfonyl group structure content per molecular weight. Therefore, in particular, in the case of using any of these compounds, when the content (mass%) in the nonaqueous electrolyte is about the same, the same effect can be expected to be exhibited. In addition, sulfates having a plurality of oxysulfonyloxy groups in one molecule are preferable, and sulfates having a plurality of ring structures and each ring structure having an oxysulfonyloxy group are also preferable.

As the sulfur-based compound, a compound having a ring structure is preferable, a compound containing a sulfur element in the ring structure is more preferable, a compound containing a sulfonyl group in the ring structure is still preferable, and a compound containing an oxysulfonyloxy group in the ring structure is particularly preferable. The sulfur-based compound preferably contains a sulfur element and an oxygen element, and is more preferably composed of each element of sulfur, oxygen, carbon, and hydrogen. The sulfur-based compound preferably has two sulfonyl groups or two oxysulfonyloxy groups in one molecule. The sulfur-based compound is preferably a molecular compound that is not an ionic compound. Such a compound can further increase the capacity retention ratio after charge-discharge cycles by efficiently decomposing at the time of initial charge-discharge.

The content of the sulfur-based compound in the nonaqueous electrolyte is preferably more than 0 mass% and 5 mass% or less, more preferably 0.01 mass% or more and 3 mass% or less, still preferably 0.05 mass% or more and 2 mass% or less, still more preferably 0.1 mass% or more and 1.5 mass% or less, still preferably 0.2 mass% or more and 1.0 mass% or less, and still more preferably 0.3 mass% or more and 0.8 mass% or less. The upper limit of the content may be 0.6 mass% or 0.4 mass%. By setting the content of the sulfur-based compound within the above range, the capacity retention ratio after charge-discharge cycles can be further increased, and the direct-current resistance after charge-discharge cycles can be lowered. At least a part of the sulfur-based compound contained in the nonaqueous electrolyte is decomposed in the initial charge-discharge to form a film covering the active materials of the positive electrode and the negative electrode. Therefore, if it can be confirmed that the sulfur-based compound remains even slightly in the nonaqueous electrolyte provided in the nonaqueous electrolyte energy storage device, it can be said that a sufficient film has already been formed on the surfaces of the active materials of the positive electrode and the negative electrode, so that the effect of suppressing the decrease in discharge capacity due to the sulfur-based compound is exhibited.

The nonaqueous electrolyte may be a nonaqueous electrolyte solution. The nonaqueous electrolyte solution contains a nonaqueous solvent, an electrolyte salt dissolved in the nonaqueous solvent, and the sulfur-based compound described above.

The nonaqueous solvent can be appropriately selected from known nonaqueous solvents. Examples of the nonaqueous solvent include cyclic carbonates, chain carbonates, carboxylic acid esters, phosphoric acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these, EC and PC are preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, the volume ratio of the cyclic carbonate to the chain carbonate (cyclic carbonate : chain carbonate) preferably falls within the range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these examples, the lithium salt is preferable.

Examples of the lithium salt include inorganic lithium salts such as LiPF₆, LiPO₂F₂, LiBF₄, and LiClO₄, and lithium oxalates such as lithium bis(oxalate)borate (LiBOB), lithium difluorooxalatoborate (LiFOB), and lithium bis(oxalate)difluorophosphate (LiFOP). Among these salts, the inorganic lithium salts are preferable, and LiPF₆ is more preferable. As the lithium salt, it is also preferable to use lithium difluorophosphate (LiPO₂F₂). As the lithium salt, LiPF₆ and LiPO₂F₂ are more preferably used in combination.

The content of the electrolyte salt in the nonaqueous electrolyte solution is, under 1 atm at 20°C, preferably 0.1 mol/dm³ or more and 2.5 mol/dm³ or less, more preferably 0.3 mol/dm³ or more and 2.0 mol/dm³ or less, still preferably 0.5 mol/dm³ or more and 1.7 mol/dm³ or less, particularly preferably 0.7 mol/dm³ or more and 1.5 mol/dm³ or less. The content of the electrolyte salt falls within the range mentioned above, thereby allowing the ionic conductivity of the nonaqueous electrolyte solution to be increased.

When LiPO₂F₂ is used, the content of LiPO₂F₂ in the nonaqueous electrolyte may be, for example, 0.01 mass% or more and 2 mass% or less, or may be 0.1 mass% or more and 1 mass% or less.

The nonaqueous electrolyte solution may contain components other than the sulfur-based compound, the nonaqueous solvent, and the electrolyte salt. Examples of other components include aromatic compounds such as biphenyl, alkylbiphenyl, terphenyl, a partially hydrogenated product of terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, and itaconic anhydride, cyclohexanedicarboxylic anhydride; and perfluorooctane, tristrimethylsilyl borate, tristrimethylsilyl phosphate, tetrakistrimethylsilyl titanate, and lithium monofluorophosphate. One of the other components may be used singly, or two or more thereof may be mixed and used.

The content of the other components contained in the nonaqueous electrolyte solution is preferably 0.01% by mass or more and 10% by mass or less, more preferably 0.1% by mass or more and 7% by mass or less, still preferably 0.2% by mass or more and 5% by mass or less, and particularly preferably 0.3% by mass or more and 3% by mass or less, with respect to the total mass of the nonaqueous electrolyte solution. The content of the other components falls within the range mentioned above, thereby making it possible to improve capacity retention performance or cycle performance after high-temperature storage, and to further improve safety.

As the nonaqueous electrolyte, a nonaqueous electrolyte solution and a solid electrolyte may be used in combination. The solid electrolyte can be selected from any material with ionic conductivity, which is solid at normal temperature (for example, 15°C to 25°C), such as lithium, sodium, and calcium. Examples of the solid electrolyte include sulfide solid electrolytes, oxide solid electrolytes, nitride solid electrolytes, and polymer solid electrolytes.

### (Positive electrode potential at end-of-discharge voltage in normal use)

The upper limit of the positive electrode potential at the end-of-discharge voltage in normal use in the nonaqueous electrolyte energy storage device according to one embodiment of the present invention is 3.5 V (vs. Li/Li⁺), preferably 3.2 V (vs. Li/Li⁺), and more preferably 3.0 V (vs. Li/Li⁺). By setting the positive electrode potential at the end-of-discharge voltage in normal use to the above upper limit or less, the discharge capacity of the nonaqueous electrolyte energy storage device can be increased. The lower limit of the positive electrode potential is preferably 2.6 V (vs. Li/Li⁺), more preferably 2.7 V (vs. Li/Li⁺), still preferably 2.8 V (vs. Li/Li⁺), and still more preferably 2.9 V (vs. Li/Li⁺). By setting the positive electrode potential at the end-of-discharge voltage in normal use to the above lower limit or more, the capacity retention ratio after charge-discharge cycles can be further increased. The positive electrode potential can be set to any lower limit described above or more and any upper limit described above or less.

The shape of the nonaqueous electrolyte energy storage device according to the present embodiment is not particularly limited, and examples thereof include cylindrical batteries, prismatic batteries, flat batteries, coin batteries, and button batteries.

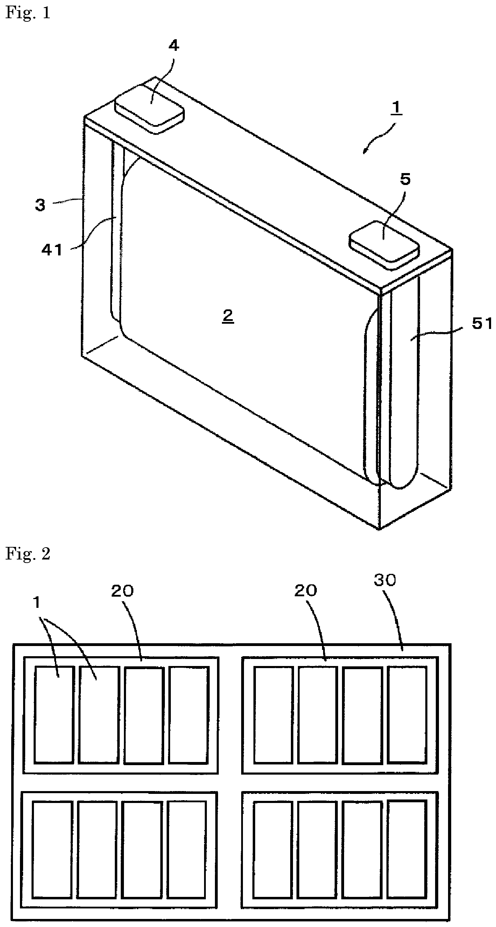

Fig. 1 shows a nonaqueous electrolyte energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted as an energy storage unit (battery module) configured by assembling a plurality of nonaqueous electrolyte energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one nonaqueous electrolyte energy storage device included in the energy storage unit.

Fig. 2 shows an example of an energy storage apparatus 30 obtained by assembling energy storage units 20 each obtained by assembling two or more electrically connected nonaqueous electrolyte energy storage devices 1. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices 1.

### <Device>

A device according to an embodiment of the present invention includes the above-described nonaqueous electrolyte energy storage device according to an embodiment of the present invention. Examples of the device include, but are not particularly limited to, electronic devices such as personal computers and communication terminals, home electric appliances, automobiles (such as EV, HEV, and PHEV), and other industrial devices.

In the device, the end-of-discharge voltage is preferably set such that a positive electrode potential at the end-of-discharge voltage of the nonaqueous electrolyte energy storage device is 3.5 V (vs. Li/Li⁺) or less in normal use. With such a setting, the discharge capacity of the nonaqueous electrolyte energy storage device provided in the device is increased. In addition, the nonaqueous electrolyte energy storage device provided in the device has a high capacity retention ratio after charge-discharge cycles even when the end-of-discharge voltage is set such that the positive electrode potential is 3.5 V (vs. Li/Li⁺) or less. The preferred range of the positive electrode potential at the end-of-discharge voltage of the nonaqueous electrolyte energy storage device set in the device is the same as that described above as the preferred range of the positive electrode potential at the end-of-discharge voltage in normal use of the nonaqueous electrolyte energy storage device. The device preferably includes a controller that controls the end-of-discharge voltage and the like.

### <Method for using nonaqueous electrolyte energy storage device>

A method for using a nonaqueous electrolyte energy storage device according to an embodiment of the present invention includes discharging a nonaqueous electrolyte energy storage device including a positive electrode containing a positive active material having a ratio of an average particle size to an average primary particle size of 5 or less and a nonaqueous electrolyte containing a compound containing a sulfur element until a positive electrode potential reaches 3.5 V (vs. Li/Li⁺) or less.

In the using method, the above-described nonaqueous electrolyte energy storage device according to an embodiment of the present invention can be suitably used. In addition, the preferred range of the positive electrode lower limit potential (lower limit value of the positive electrode potential) when discharging is performed in the use method is the same as that described above as the preferred range of the positive electrode potential at the end-of-discharge voltage in normal use of the nonaqueous electrolyte energy storage device. In the using method, the above-described device according to an embodiment of the present invention can be suitably used. In the method of use, the capacity retention ratio after charge-discharge cycles is high despite the fact that the positive electrode potential of the nonaqueous electrolyte energy storage device reaches 3.5 V (vs. Li/Li⁺) or less during discharge.

### <Method for manufacturing nonaqueous electrolyte energy storage device>

A method for manufacturing a nonaqueous electrolyte energy storage device according to an embodiment of the present invention is a method for manufacturing a nonaqueous electrolyte energy storage device having a positive electrode potential of 3.5 V (vs. Li/Li⁺) or less at an end-of-discharge voltage in normal use, the method including: preparing a positive electrode containing a positive active material having a ratio of an average particle size to an average primary particle size of 5 or less; and preparing a nonaqueous electrolyte containing a compound containing a sulfur element. The content of the compound containing a sulfur element in the nonaqueous electrolyte to be prepared is preferably 0.5 mass% or more.

Providing the positive electrode may be fabricating the positive electrode. The positive electrode can be fabricated, for example, by applying a positive composite paste to a positive substrate directly or with an intermediate layer interposed therebetween, and drying the paste. After the drying, pressing or the like may be performed, if necessary. The positive composite paste includes respective components constituting the positive active material layer, such as the positive active material, and the conductive agent or binder as an optional component. The positive composite paste typically further includes a dispersion medium. The specific form and preferred form of the positive electrode to be prepared are the same as the specific form and preferred form of the positive electrode provided in the nonaqueous electrolyte energy storage device according to one embodiment of the present invention described above.

Providing the nonaqueous electrolyte may be preparing a nonaqueous electrolyte. The nonaqueous electrolyte can be prepared, for example, by mixing a nonaqueous solvent, an electrolyte salt, and a sulfur-based compound. The content of the sulfur-based compound in the nonaqueous electrolyte to be prepared is preferably 0.01 mass% or more and 5 mass% or less, more preferably 0.1 mass% or more and 3 mass% or less, still preferably 0.2 mass% or more and 2 mass% or less, and still more preferably 0.3 mass% or more and 1.5 mass% or less. The lower limit of the content may be 0.5 mass%, 0.7 mass%, 0.9 mass%, or 1.1 mass%. In addition, the specific form and preferred form of the nonaqueous electrolyte to be prepared are the same as the specific form and preferred form of the nonaqueous electrolyte included in the nonaqueous electrolyte energy storage device according to one embodiment of the present invention described above.

The manufacturing method may further include preparing a negative electrode, preparing a separator, stacking or winding the positive electrode and the negative electrode with the separator interposed therebetween to form an electrode assembly, housing the electrode assembly and the nonaqueous electrolyte in a case, and performing initial charge-discharge. Usually, by performing initial charge-discharge, at least a part of the sulfur-based compound is decomposed, and a film covering the active materials of the positive electrode and the negative electrode is formed. Specific forms and preferable forms of the negative electrode and the separator to be prepared are the same as the specific forms and preferable forms of the negative electrode and the separator provided in the nonaqueous electrolyte energy storage device according to one embodiment of the present invention described above.

Housing the nonaqueous electrolyte in a case can be appropriately selected from known methods. For example, in the case of using a nonaqueous electrolyte solution for the nonaqueous electrolyte, the nonaqueous electrolyte solution may be injected from an inlet formed in the case, and the inlet may be then sealed.

### <Other embodiments>

The nonaqueous electrolyte energy storage device, the device, the method for using the nonaqueous electrolyte energy storage device, and the method for manufacturing the nonaqueous electrolyte energy storage device of the present invention are not limited to the above embodiments, and various changes may be made without departing from the gist of the present invention. For example, to the configuration of an embodiment, the configuration of another embodiment can be added, and a part of the configuration of an embodiment can be replaced by the configuration of another embodiment or a well-known technique. Furthermore, a part of the configuration according to an embodiment can be deleted. In addition, a well-known technique can be added to the configuration according to one embodiment.

While a case where the nonaqueous electrolyte energy storage device is used as a nonaqueous electrolyte secondary battery (for example, lithium ion secondary battery) that is chargeable and dischargeable has been described in the embodiment mentioned above, the type, shape, dimensions, capacity, and the like of the nonaqueous electrolyte energy storage device are arbitrary. The present invention can also be applied to capacitors such as various secondary batteries, electric double-layer capacitors, or lithium ion capacitors.

While the electrode assembly with the positive electrode and the negative electrode stacked with the separator interposed therebetween has been described in the embodiment mentioned above, the electrode assembly does not have to include the separator. For example, the positive electrode and the negative electrode may be brought into direct contact with each other, with a non-conductive layer formed on the active material layer of the positive electrode or negative electrode.

### EXAMPLES

Hereinafter, the present invention will be described more specifically with reference to examples, but the present invention is not to be considered limited to the following examples.

### [Example 1]

### (Fabrication of positive electrode)

As a positive active material, Li_{1.0}Ni_{0.6}Co_{0.2}Mn_{0.2}O₂ (single-particle-based particles) having an average primary particle size of 2.5 µm, an average particle size of 5.5 pm, and a ratio of the average particle size to the average primary particle size of 2.2 was prepared.

A positive composite paste containing the positive active material (single-particle-based particles), polyvinylidene fluoride (PVDF) as a binder, and acetylene black (AB) as a conductive agent and containing N-methylpyrrolidone (NMP) as a dispersion medium was prepared. The ratios by mass of the positive active material, conductive agent, and binder were set to be 94.5 : 1.5 : 4.0 in terms of solid content. The positive composite paste was applied to an aluminum foil as a positive substrate, dried, and pressed to form a positive active material layer. Thus, a positive electrode with the positive active material layer stacked on the positive substrate was obtained.

### (Fabrication of negative electrode)

Prepared was a negative composite paste containing graphite as a negative active material, a styrene-butadiene rubber (SBR) as a binder, and a carboxymethyl cellulose (CMC) as a thickener with water as a dispersion medium. The ratios by mass of the negative active material, binder, and thickener were set to be 97.8 : 1.0 : 1.2 in terms of solid content. The negative composite paste was applied to a copper foil as a negative substrate, dried, and pressed to form a negative active material layer. Thus, a negative electrode with the negative active material layer stacked on the negative substrate was obtained.

### (Preparation of nonaqueous electrolyte)

Lithium hexafluorophosphate (LiPF₆) was mixed at a concentration of 1.0 mol/dm³ with a nonaqueous solvent obtained by mixing an ethylene carbonate (EC), a propylene carbonate (PC), and an ethyl methyl carbonate (EMC) at volume ratios of 25 : 5 : 70. To this mixed solution, sulfur-based compound A (4,4'-bis(2,2-dioxo-1,3,2-dioxathiolane)) and lithium difluorophosphate (LiPO₂F₂) were mixed in contents of 0.75 mass% and 0.50 mass%, respectively, to prepare a nonaqueous electrolyte.

### (Assembly of nonaqueous electrolyte energy storage device)

The positive electrode and the negative electrode were stacked with a microporous membrane separator made of polyethylene interposed therebetween to prepare an electrode assembly. The electrode assembly was housed in a case, and the nonaqueous electrolyte was injected into the case to obtain a nonaqueous electrolyte energy storage device according to Example 1.

### [Examples 2 to 3]

Nonaqueous electrolyte energy storage devices of Examples 2 and 3 were obtained similarly to Example 1 except that the content of the sulfur-based compound A contained in the nonaqueous electrolyte was changed as shown in Table 1.

### [Comparative Example 1 and Reference Example 1]

### (Fabrication of positive electrode)

As a positive active material, Li_{1.0}Ni_{0.6}Co_{0.2}Mn_{0.2}O₂ (secondary particles) having an average primary particle size of 0.6 µm, an average particle size of 8.5 µm, and a ratio of the average particle size to the average primary particle size of 14.2 was prepared. A positive electrode was obtained similarly to Example 1 except that the secondary particles were used as the positive active material.

### (Fabrication of negative electrode)

A negative electrode was obtained similarly to Example 1.

### (Preparation of nonaqueous electrolyte)

Lithium hexafluorophosphate (LiPF₆) was mixed at a concentration of 1.0 mol/dm³ with a nonaqueous solvent obtained by mixing an ethylene carbonate (EC), a propylene carbonate (PC), and an ethyl methyl carbonate (EMC) at volume ratios of 25 : 5 : 70. Vinylene carbonate (VC) and lithium difluorophosphate (LiPO₂F₂) were mixed with the mixed solution in contents of 0.40 mass% and 0.50 mass%, respectively, to prepare a nonaqueous electrolyte.

### (Assembly of nonaqueous electrolyte energy storage device)

The positive electrode and the negative electrode were stacked with a microporous membrane separator made of polyethylene interposed therebetween to prepare an electrode assembly. The electrode assembly was housed in a case, and the nonaqueous electrolyte was injected into the case to obtain each nonaqueous electrolyte energy storage device of Comparative Example 1 and Reference Example 1. The nonaqueous electrolyte energy storage device of Comparative Example 1 and the nonaqueous electrolyte energy storage device of Reference Example 1 differ only in the later-described charge-discharge conditions, and have the same structure. The same applies to the nonaqueous electrolyte energy storage device of Comparative Example 2, the nonaqueous electrolyte energy storage device of Reference Example 2, and the like described later.

### [Comparative Examples 2 to 4 and Reference Examples 2 to 4]

Nonaqueous electrolyte energy storage devices of Comparative Examples 2 to 4 and Reference Examples 2 to 4 were obtained similarly to Comparative Example 1 and Reference Example 1 except that the nonaqueous electrolyte contained the sulfur-based compound A in the content shown in Table 1.

### [Evaluation]

### (Initial charge-discharge)

The nonaqueous electrolyte energy storage devices of the assembled Examples 1 to 3, Comparative Examples 1 to 4 and Reference Examples 1 to 4 were subjected to the following initial charge-discharge. Constant current constant voltage charge was performed at 25°C under the conditions of a charge current of 1.0 C and an end-of-charge voltage of 4.25 V until the charge time reached 3 hours in total. Thereafter, a pause time of 10 minutes was provided. Next, constant current discharge was performed under the conditions of a discharge current of 1.0 C and an end-of-discharge voltage described in Table 1.

For each of the nonaqueous electrolyte energy storage devices of Examples 1 to 3, the content of the sulfur-based compound A (4,4'-bis(2,2-dioxo-1,3,2-dioxathiolane)) in the nonaqueous electrolyte after the initial charge-discharge was measured by gas chromatography (GC). In Example 1, the presence of the sulfur-based compound A could be confirmed by gas chromatography mass spectrometry (GC-MS) separately measured, but the content of the sulfur-based compound A could not be quantified because the content was below the detection limit by GC. In Example 2, the content of the sulfur-based compound A in the nonaqueous electrolyte after the initial charge-discharge was 0.25 mass%, and in Example 3, the content of the sulfur-based compound A in the nonaqueous electrolyte after the initial charge-discharge was 0.36 mass%.

### (Charge-discharge cycle test)

The nonaqueous electrolyte energy storage devices of Examples 1 to 3, Comparative Examples 1 to 4, and Reference Examples 1 to 4 which were initially charged and discharged were subjected to a charge-discharge cycle test in the following manner. At 45°C, constant current constant voltage charge was performed at a charge current of 1.0 C and an end-of-charge voltage of 4.25 V. The end-of-charge condition was a time point when the charge current decreased to 0.01 C. Thereafter, constant current discharge was performed at a discharge current of 1.0 C and the end-of-discharge voltage listed in Table 1. After each of the charge and the discharge, a pause period of 10 minutes was provided. This charge-discharge was performed for 2000 cycles. Table 1 also shows the positive electrode potential at the end-of-discharge voltage.

### (Capacity retention ratio)

The percentage of the discharge capacity of the 2000th cycle to the discharge capacity of the first cycle in each of the nonaqueous electrolyte energy storage devices of Examples 1 to 3, Comparative Examples 1 to 4, and Reference Examples 1 to 4 was obtained as a capacity retention ratio. The results are shown in Table 1.

### (Direct-current resistance)

For each of the nonaqueous electrolyte energy storage devices of Examples 1 to 3, the direct-current resistance was measured in the following manner after 1000 cycles in the charge-discharge cycle test. In a thermostatic bath at 25°C, constant current charge with a charge current of 1.0 C was performed to set the SOC to 50%. Thereafter, in a thermostatic bath at -10°C, the battery was discharged at a discharge current of 0.2 C, 0.5 C, and 1.0 C in this order for 30 seconds each. After completion of each discharge, the energy storage devices were subjected to constant current charge at a charge current of 0.05 C to the SOC of 50%. The relationship between the discharge current at each discharge current and the voltage at 10 seconds after the start of discharge was plotted, and the direct-current resistance (DCR) was determined from the slope of a straight line obtained from the plots of 3 points. Table 1 shows the values of DCR as relative values with the value of Example 1 as a reference (100.0%).

**[Table 1]**

| | Positive active material | Sulfur-based compound | | End-of-discharge voltage / V | Positive electrode potential at end-of-discharge voltage / V (vs. Li/Li⁺) | Capacity retention ratio (after 2000 cycles) / % | DCR relative value (after 1000 cycles) / % |
|---|---|---|---|---|---|---|---|
| | | Type | Content (preparation) / mass % | | | | |
| Example 1 | Single-particle-based particles | A | 0.75 | 2.75 | 2.99 | 90.1 | 100.0 |
| Example 2 | ↑ | A | 1.00 | ↑ | ↑ | 91.7 | 94.9 |
| Example 3 | ↑ | A | 1.20 | ↑ | ↑ | 92.1 | 93.9 |
| Comparative Example 1 | Secondary particles | - | 0 | ↑ | ↑ | 78.3 | - |
| Comparative Example 2 | ↑ | A | 0.40 | ↑ | ↑ | 75.4 | - |
| Comparative Example 3 | ↑ | A | 0.80 | ↑ | ↑ | 72.6 | - |
| Comparative Example 4 | ↑ | A | 1.20 | ↑ | ↑ | 67.8 | - |
| Reference Example 1 | ↑ | - | 0 | 3.49 | 3.67 | 90.0 | - |
| Reference Example 2 | ↑ | A | 0.40 | ↑ | ↑ | 92.8 | - |
| Reference Example 3 | ↑ | A | 0.80 | ↑ | ↑ | 93.9 | - |
| Reference Example 4 | ↑ | A | 1.20 | ↑ | ↑ | 93.9 | - |

| | | | | | | | |
|---|---|---|---|---|---|---|---|
| A: 4,4'-bis(2,2-dioxo-1,3,2-dioxathiolane) | | | | | | | |

As shown in Reference Examples 1 to 4, when the positive electrode potential at the end-of-discharge voltage was not 3.5 V (vs. Li/Li⁺) or less, inclusion of a sulfur-based compound in the nonaqueous electrolyte of the nonaqueous electrolyte energy storage device in which the positive active material was secondary particles improved the capacity retention ratio after charge-discharge cycles. As can be seen from the comparison between Comparative Example 1 and Reference Example 1, in the nonaqueous electrolyte energy storage device in which the positive active material was the secondary particles, the positive electrode potential at the end-of-discharge voltage was 3.5 V (vs. Li/Li⁺) or less, so that the capacity retention ratio after charge-discharge cycles was significantly reduced. Then, as shown in Comparative Examples 1 to 4, when the positive electrode potential at the end-of-discharge voltage was 3.5 V (vs. Li/Li⁺) or less, even when the nonaqueous electrolyte of the nonaqueous electrolyte energy storage device in which the positive active material was the secondary particle contained the sulfur-based compound, the capacity retention ratio after charge-discharge cycles was not improved and rather deteriorated. On the other hand, as shown in Examples 1 to 3, when the positive electrode potential at the end-of-discharge voltage was 3.5 V (vs. Li/Li⁺) or less, the effect of suppressing the decrease in the capacity retention ratio after charge-discharge cycles due to the inclusion of a sulfur-based compound in the nonaqueous electrolyte could be confirmed by using single-particle-based particles as the positive active material. From the results of Examples 1 to 3, the effect of reducing the direct-current resistance after charge-discharge cycles by containing the sulfur-based compound was also confirmed.

### [Reference Example 5]

### (Fabrication of positive electrode)

As a positive active material, Li_{1.0}Ni_{0.6}Co_{0.2}Mn_{0.2}O₂ (secondary particles) having an average primary particle size of 0.6 µm, an average particle size of 8.5 µm, and a ratio of the average particle size to the average primary particle size of 14.2 was prepared.

A positive composite paste containing the positive active material (secondary particles), polyvinylidene fluoride (PVDF) as a binder, and acetylene black (AB) as a conductive agent and containing N-methylpyrrolidone (NMP) as a dispersion medium was prepared. The ratios by mass of the positive active material, conductive agent, and binder were set to be 94.5 : 1.5 : 4.0 in terms of solid content. The positive composite paste was applied to an aluminum foil as a positive substrate, dried, and pressed to form a positive active material layer. Thus, a positive electrode with the positive active material layer stacked on the positive substrate was obtained.

### (Fabrication of negative electrode)

Prepared was a negative composite paste containing graphite as a negative active material, a styrene-butadiene rubber (SBR) as a binder, and a carboxymethyl cellulose (CMC) as a thickener with water as a dispersion medium. The ratios by mass of the negative active material, binder, and thickener were set to be 97.8 : 1.0 : 1.2 in terms of solid content. The negative composite paste was applied to a copper foil as a negative substrate, dried, and pressed to form a negative active material layer. Thus, a negative electrode with the negative active material layer stacked on the negative substrate was obtained.

### (Preparation of nonaqueous electrolyte)

Lithium hexafluorophosphate (LiPF₆) was mixed at a concentration of 1.0 mol/dm³ with a nonaqueous solvent obtained by mixing an ethylene carbonate (EC), a propylene carbonate (PC), and an ethyl methyl carbonate (EMC) at volume ratios of 25 : 5 : 70. To this mixed solution, sulfur-based compound A (4,4'-bis(2,2-dioxo-1,3,2-dioxathiolane)) and vinylene carbonate (VC) were mixed in contents of 0.50 mass% and 0.50 mass%, respectively, to prepare a nonaqueous electrolyte.

### (Assembly of nonaqueous electrolyte energy storage device)

The positive electrode and the negative electrode were stacked with a microporous membrane separator made of polyethylene interposed therebetween to prepare an electrode assembly. The electrode assembly was housed in a case, and the nonaqueous electrolyte was injected into the case to obtain a nonaqueous electrolyte energy storage device of Reference Example 5.

### [Reference Example 6]

A nonaqueous electrolyte energy storage device of Reference Example 6 was obtained similarly to Reference Example 5 except that the sulfur-based compound A contained in the nonaqueous electrolyte was changed to a sulfur-based compound B (1,3-propenesultone).

### [Comparative Example 5]

A nonaqueous electrolyte energy storage device of Comparative Example 5 was obtained similarly to Reference Example 5 except that the nonaqueous electrolyte did not contain the sulfur-based compound A.

### [Evaluation]

### (Initial direct-current resistance)

The nonaqueous electrolyte energy storage devices of Reference Examples 5 and 6 and Comparative Example 5 were initially charged and discharged, and then the initial direct-current resistance was measured in the following manner. In a thermostatic bath at 25°C, constant current charge with a charge current of 1.0 C was performed to set the SOC to 50%. Thereafter, in a thermostatic bath at -10°C, the battery was discharged at a discharge current of 0.2 C, 0.5 C, and 1.0 C in this order for 30 seconds each. After completion of each discharge, the energy storage devices were subjected to constant current charge at a charge current of 0.05 C to the SOC of 50%. The relationship between the discharge current at each discharge current and the voltage at 10 seconds after the start of discharge was plotted, and the initial direct-current resistance (initial DCR) was determined from the slope of a straight line obtained from the plot of 3 points. Each initial DCR is shown in Table 2 as a relative value with the value of Comparative Example 5 as a reference (100%).

**[Table 2]**

| | Sulfur-based compound | | Initial DCR relative value / % |
|---|---|---|---|
| | Type | Content (preparation) / mass % | |
| Comparative Example 5 | - | 0 | 100 |
| Reference Example 5 | A | 0.50 | 98 |
| Reference Example 6 | B | 0.50 | 116 |

| | | | |
|---|---|---|---|
| A: 4,4'-bis(2,2-dioxo-1,3,2-dioxathiolane) B: 1,3-propene sultone | | | |

From the results of Reference Examples 5 and 6 and Comparative Example 5, it was confirmed that the initial direct-current resistance of the nonaqueous electrolyte energy storage device can also be reduced by using sulfates (sulfur-based compound A) as the sulfur-based compound.

### INDUSTRIAL APPLICABILITY

The present invention can be applied to nonaqueous electrolyte energy storage devices and the like for use as power sources for electronic devices such as personal computers and communication terminals, and automobiles and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device comprising a positive electrode and a nonaqueous electrolyte,
wherein the positive electrode potential at an end-of-discharge voltage in normal use is 3.5 V (vs. Li/Li⁺) or less, the positive electrode contains a positive active material having a ratio of average particle size to average primary particle size of 5 or less, and the nonaqueous electrolyte contains a compound containing a sulfur element.

2. The nonaqueous electrolyte energy storage device according to claim 1, wherein the compound containing a sulfur element is a member of sulfates.

3. The nonaqueous electrolyte energy storage device according to claim 1 or 2, wherein the nonaqueous electrolyte further contains lithium difluorophosphate.

4. A device comprising the nonaqueous electrolyte energy storage device according to claim 1 or 2.

5. A method for using a nonaqueous electrolyte energy storage device, comprising: discharging a nonaqueous electrolyte energy storage device including a positive electrode containing a positive active material having a ratio of an average particle size to an average primary particle size of 5 or less and a nonaqueous electrolyte containing a compound containing a sulfur element until a positive electrode potential reaches 3.5 V (vs. Li/Li⁺) or less.

6. A method for manufacturing a nonaqueous electrolyte energy storage device, the method comprising:
preparing a positive electrode containing a positive active material having a ratio of an average particle size to an average primary particle size of 5 or less; and
preparing a nonaqueous electrolyte containing a compound containing a sulfur element, wherein
a content of the compound containing a sulfur element in the nonaqueous electrolyte is 0.5 mass% or more, and a positive electrode potential at an end-of-discharge voltage in normal use is 3.5 V (vs. Li/Li⁺) or less.
